# EUROPÄISCHE PATENTANMELDUNG

(11) **EP 1 686 525 A1**
(43) Veröffentlichungstag der Anmeldung: **02.08.2006**
(21) Anmeldenummer: 06101100.3
(22) Anmeldetag: 31.01.2006
(51) Int. Cl.: G06Q 10/00

(54) **Lagerhaltungssystem und Betriebsverfahren eines solchen Lagerhaltungssystems**

(30) Priorität: 31.01.2005 EP 05001896
(71) Anmelder: ALSO Holding AG, 6052 Hergiswil (CH)
(72) Erfinder: Poli, Giulio, 6280 Hochdorf (CH); Von Ins, Urs, 4573 Lohn-Ammannsegg (CH)
(74) Vertreter: Gaussmann, Andreas

(57) **Zusammenfassung**

Die Erfindung betrifft ein Lagerhaltungssystem und ein Betriebsverfahren eines solchen Lagerhaltungssystems wobei in eine Lagerhalle angelieferte Waren mehrerer Lieferanten und/oder Kunden an demselben Lagerplatz nach Warengleichheit eingelagert und/oder gelagert sind.

## Beschreibung

Die Erfindung betrifft ein Lagerhaltungssystem und ein Betriebsverfahren eines solchen Lagerhaltungssystems gemäss der Definition der unabhängigen Patentansprüche.

Ein Lagerhaltungssystem ermöglicht gezielte Warenbewegungen vom Lieferanten zum Kunden. Damit die richtigen Waren in der richtigen Menge zur rechten Zeit in geeigneter Form am richtigen Platz sind, bedarf es dabei Funktionen wie Wareneingang, Einlagerung, Kommissionierung, Verpackung, Verladung sowie Bestandsprüfung. Diese Funktionen müssen optimal, das heisst: schnell, zu geringem Preis und mit tiefer Fehlerquote erfüllt werden.

Der Lieferant liefert Waren also nicht direkt an den Kunden, sondern lagert sie in einer Lagerhalle eines Lagerhaltungssystems ein, um so die Kundenbedürfnisse optimal zu befriedigen. Ein solches Lagerhaltungssystem bezieht meistens Waren von mehreren Lieferanten und beliefert eine grosse Zahl von Kunden. In der Lagerhalle eingegangene Waren wird bis zum Warenkauf nach Lieferanten eingelagert und bei einem Weiterverkauf kommissioniert und in ein Lager des Käufers verschoben.

US2003/0105684A1 zeigt ein Lagerhaltungssystem, wo ein Lieferant Waren in einer Lagerhalle einlagert. Um eingelagerte Waren möglichst kurze Zeit im Lagerhaltungssystem zu behalten, wird der Wareneingang zeitlich erfasst und bei einem Warenkauf durch einen Kunden werden zuerst eingelagerte Waren an diesen Kunden kommissioniert.

Bei diesem Lagerhaltungssystem erfolgt ein Eingentumsübertrag der eingelagerten Waren an den das Lagerhaltungssystem betreibenden Verteiler. Es ist also der Verteiler, der die eingelagerten Waren vom Lieferanten kauft und an den Kunden weiterverkauft.

Aufgabe der vorliegenden Erfindung ist es, ein Lagerhaltungssystem und ein Betriebsverfahren eines solchen Lagerhaltungssystems bereitzustellen, das die Anforderungen nach hoher Geschwindigkeit, geringen Kosten und tiefer Fehlerquote optimal erfüllt.

Diese Aufgabe wird durch die Erfindung gemäss der Definition der unabhängigen Patentansprüche gelöst.

Im erfindungsgemässen Lagerhaltungssystem werden artgleiche Waren jeweils gemeinsam am selben Lagerplatz gelagert. In einer Lagerhalle angelieferte Waren werden an einem warengleichen Lagerplatz nach Warengleichheit eingelagert und/oder gelagert, unabhängig davon, ob die Waren noch dem Lieferanten oder bereits dem Kunden gehören.

Vorteilhaft an diesem Lagerhaltungssystem ist, dass die Waren verschiedener Lieferanten während des Lageraufenthaltes nicht umgelagert werden, sondern von der Einlieferung bis zur Auslieferung an unterschiedliche Kunden stets am selben Lagerplatz verbleiben. Kaufmännische Vorgänge werden durch die Erfindung erleichert, d.h. sie können sehr schnell durchgeführt und abgeschlossen werden. Der das Lagerhaltungssystem betreibende Verteiler braucht die gelagerte Ware auch nicht zu erwerben, sondern verwaltet sie nur und führt kaufmännische Vorgänge durch. Vorteilhafterweise finden in Folge dieser kaufmännischen Vorgängen keine Warenumlagerungen statt, was die Prozesskosten erniedrigt. Auch ermöglicht das Vorsehen von warengleichen Lagerplätzen eine vorteilhafte Raumverdichtung in der Lagerhalle. Waren gleicher Art und Güte werden nicht mehr redundant an verschiedenen Lagerplätzen in verschiedenen Lieferanten und/oder Kunden reservierten Bereichen der Lagerhalle eingelagert und/oder gelagert, sondern raumverdichtet konzentriert an ein und demselben warengleichen Lagerplatz eingelagert und/oder gelagert. Auf diese Weise werden im Rahmen des üblichen Warendurchsatzes durchaus häufige Raumprobleme wie Überfüllung, Leerstand, falsche Einlagerung, usw. in unterschiedlichen für Lieferanten und Kunden reservierten Bereichen der Lagerhalle vermieden, was Raum- und Kosteneinsparungen bewirkt und die Fehlerquote gering hält.

Artgleiche Waren sind Waren gleicher Art und Güte, die untereinander austauschbar sind und sich nicht voneinander unterscheiden. Dies ist praktisch bei allen industriellen Serienerzeugnissen der Fall. Artgleiche Waren kennzeichnen sich beispielsweise durch eine gleiche Warennummer des Herstellers oder durch Erfüllung einer bestimmten Warenspezifikation. Warengleichheit ist somit eine körperliche oder technische Eigenschaft.

Vorteilhafterweise werden artgleiche Waren von mehreren Lieferanten und/oder Kunden vermengt an ein und demselben Lagerplatz der Lagerhalle eingelagert und/oder gelagert.

Waren gleicher Art und Güte werden also nicht an verschiedenen Lagerplätzen in für verschiedene Lieferanten und/oder Kunden reservierten Bereichen des Lagerhaltungssystems eingelagert und/oder gelagert. Vielmehr werden die Waren der Lieferanten nach dem Wareneingang an durch die Warengleichheit definierten Lagerplätzen eingelagert und bleiben bis zur Kommisionierung an Kunden, das heisst bis zum Verlassen des Lagers in diesen einmal gewählten Lagerplätzen gelagert, selbst wenn zwischenzeitlich ein Warenkauf durch einen Kunden erfolgt, d.h. selbst nach einer Eigentumsübertragung vom Lieferanten an den Kunden. Ein solcher warengleicher Lagerplatz ist beispielsweise eine Palette oder ein Behälter mit darauf sich befindender Waren gleicher Art und Güte. Die Palette oder Kiste kann in einem Hochregal stehen. Je nach Volumen und Menge der artgleichen Waren können diese auch auf mehreren Paletten oder Behältern gelagert sein. Auch ist es möglich, bei geringem Volumen und bei geringer Menge der Waren, verschiedene Warenarten auf einer einzigen Palette oder in einem einzigen Behälter zu lagern. Bei Kenntnis der vorliegenden Erfindung hat der Fachmann hier vielfältige Möglichkeiten der Variation.

Den in der Lagerhalle eingelagerten Waren werden in einer elektronischen Bestandesführung Eigentümermerkmale zugeordnet. Somit findet bei Warenkauf von in der Lagerhalle eingelagerter Ware eine Eigentumsübertragung vom Lieferanten auf den Kunden nur mittels Bestandesmeldung zwischen verschiedenen Eigentümern in der elektronischen Bestandesführung statt. Eine physische Warenumlagerung wird nicht durchgeführt. Die Lieferanten und die Kunden können somit autonom agieren und Eigentumsübertragungen vertikal (von Lieferanten auf Kunden) oder horrizontal (zwischen Lieferanten oder zwischen Kunden) durchführen. Die elektronische Bestandesführung ist beispielsweise eine handelsübliche Lagerbewirtschaftungssoftware, die auf einer elektronischen Recheneinheit mit Arbeitsprozessor, mindestens einem Speicher und Ein- und Ausgabemitteln ausführbar ist.

Das konsequente Lagern von Waren gleicher Art und Güte stets am selben Ort hat im Gegensatz zu herkömmlichen Lagersystemen, bei denen kaufmännische Vorgänge wie Kauf/Verkauf, Kommissionierung, Eigentumsübertragung usw. jeweils Lagerbewegungen auslösen den Vorteil, dass in der Lagerhalle keine physische Warenumlagerung mehr erfolgen muss. Auch müssen keine damit verbundenen Wareneingangs- und Warenausgangskontrolle und Transporte mehr stattfinden, was Zeit, Aufwand und Kosten spart. Die Waren-Paletten und/oder -Kisten müssen also nicht mehr zum Beispiel mit einem Gabelstabler von einem Lagerplatz zu einem anderen Lagerplatz umgelagert werden. Auch werden jegliche mit der Warenumlagerung verbundenen Transportschäden vermieden, wie bei Waren, die von einer Palette und/oder aus einer Kiste fallen und beschädigt werden, usw..

Vorteilhafterweise werden beim Wareneingang angelieferte Waren gleicher Art und Güte identifiziert und mit einer Lagerwarennummer verknüpft. Die Identifzierung erfolgt beispielsweise durch einen magnetischen Strichkode (Barcode) oder eine Radiofrequenz Etikette (Radio Frequency Identification = RFID) und kann mit einem entsprechenden Lesegerät in die elektronische Bestandesführung eingelesen werden. Zum Beispiel ist das Lesegerät ein magnetischer Strichkode-Leser oder ein Transponder zum Lesen von Radiofrequenz Etiketten, welches Lesegerät über geeignete elektrische Verbindungen zur Übermittlung der eingelesenen Lagerwarennummer mit der elektronischen Bestandesführung in Verbindung steht. Der magnetischen Strichkode und/oder die Radiofrequenz Etikette kann auf direkt auf den Waren und/oder auf der Verpackung der Waren und/oder auf dem Lieferschein der Waren angebracht sein.

Vorteilhafterweise wird eine Warennummer des Herstellers als Lagerwarennummer des Lagerhaltungssystems verwendet. Eine solche Warennummer kann bereits auf den Waren und/oder auf deren Verpackung und/oder auf deren Lieferschein angebracht sein. Dies hat den Vorteil, dass bereits beim Wareneingang eine vorhandene Warennummer des Herstellers als Lagerwarennummer übernommen werden kann, dass also keine weitere Lagerwarennummer zur Warennummer des Herstellers hinzugefügt werden muss, was Zeit, Aufwand und Kosten spart und die Fehlerquote tief hält.

Um die beim Wareneingang angelieferte Waren mit einer tiefen Fehlerquote zu identifizieren, werden vorteilhafterweise neben der Warennummer des Herstellers auch weitere Parameter erfasst. Beispielsweise wird das Gewicht der angelieferten Waren mit einer Genauigkeit von 10 Gramm, 100 Gramm oder 1000 Gramm erfasst. Auch kann die Palettengrösse sowie die Palettenbelegung der angelieferten Waren (Ganzpalette, Mischpalette) erfasst werden. Weiter könnte eine Seriennummercharakteristik der angelieferten Waren erfasst und auf Eindeutigkeit der Länge der Seriennummer und Zeichenfolge der Seriennummer geprüft werden.

Vorteilhafterweise wird die vom Hersteller angelieferte Warenmenge in der elektronischen Bestandesführung unter der Lagerwarennummer auf den Lieferanten oder bei bereits erfolgtem Kauf auf den Kunden als Eigentümer eingebucht. Falls sich bereits ein Warenposten der Waren gleicher Art und Güte in der elektronischen Bestandesführung befindet, so werden neu angelieferte Waren gleicher Art und Güte diesem bereits bestehenden Warenposten zugebucht. Ein diesen Vorgang ausführender Lagermitarbeiter kann dabei von der elektronischen Bestandesführung zusätzlich angefragt werden, ob die angelieferte Warenmenge artgleich mit dem bereits eingebuchten Warenposten ist. Der Lagermitarbeiter führt daraufhin eine optisch/physische Überprüfung der Warengleichheit durch.

Vorteilhafterweise werden jeder Lagerwarennummer je nach Platzbedarf warengleiche Lagerplätze in der Lagerhalle zugeordnet. Eingegangene Waren gleicher Art und Güte werden entsprechend der Lagerwarennummer am selben Lagerplatz eingelagert.

Vorteilhafterweise wird das Eingangsdatum artgleicher Waren gespeichert und die Waren werden basierend auf diesem Eingangsdatum nach dem FiFo-Prinzip (First in First out) kommissioniert.

Vorteilhafterweise wird beim Warenkauf die vom Kunden gekaufte Warenmenge unter der Lagerwarennummer auf den Kunden als Eigentümer in der elektronischen Bestandesführung umgebucht. Die Vorteile dieser einzig auf einer Umbuchung basierenden Eigentumsübertragung liegt im grossen Zeitgewinn, der geringen Fehleranfälligkeit und den Einsparungen in den Prozesskosten.

Vorteilhafterweise werden Waren gleicher Art und Güte an einem warengleichen Lagerplatz eingelagert und von diesem warengleichen Lagerplatz aus kommissioniert. Bei Abruf der Waren gleicher Art und Güte durch den Kunden wird basierend auf den Daten der elektronischen Bestandesführung ein Rüstschein ausgestellt und die darauf aufgeführte Warenmenge von warengleichen Lagerplatz aus kommissioniert, verpackt und verladen. Der Rüstschein kann physisch auf Papier gedruckt sein oder auf ein elektronisches Medium übertragen und auf einem Bildschirm darstellbar sein.

Vorteilhafterweise wird beim Wareneingang überprüft, ob der Lieferant von angelieferten und über die Lagerwarennummer identifizierten artgleichen Waren einer Warenvermengung zustimmt und diese artgleichen Waren an einem warengleichen Lagerplatz im Lagerhaltungssystem eingelagert werden sollen. In ähnlicher Weise wird bei jedem Eigentumsübertrag überprüft, ob ein neuer Eigentümer von artgleichen Waren einer Warenvermengung zustimmt und die sich in seinem seinem Eigentum befindenden artgleichen Waren an einem warengleichen Lagerplatz im Lagerhaltungssystem gelagert bzw. umgelagert werden sollen. Dazu führt die elektronische Bestandesführung zu jeder Lagerwarennummer einen eigentümerspezifischen Vermengungsparameter, der beispielsweise auf "Eins" oder "Null" gesetzt werden kann. Wenn der Lieferant bzw. neue Eigentümer einer Warenvermengung zustimmt, wird der Vermengungsparameter auf "Eins" gesetzt und die entsprechenden sich im Eigentum des Lieferanten bzw. neuen Eigentümers befindenden artgleichen Waren werden an einen warengleichen Lagerplatz des Lagerhaltungssystems eingelagert bzw. bleiben sie dort gelagert bzw. werden sie dorthin umgelagert. Im Falle, dass der Lieferant bzw. neue Eigentümer eine Warenvermengung ablehnt, wird der Vermengungsparameter auf "Null" gesetzt und die entsprechenden sich im Eigentum des Lieferanten bzw. neuen Eigentümers befindenden Waren werden in einen für den Lieferanten reservierten Bereich des Lagerhaltungssystems eingelagert bzw. werden sie dorthin umgelagert.

Es steht der Ausführung der Erfindung nicht entgegen, wenn einzelne Waren oder einzelne Exemplare gleichartiger Waren auf separaten Lagerplätzen untergebracht werden. Dies kann auf speziellen Wunsch der Kunden oder aus Sicherheitsgründen erforderlich werden. Grosse Lager können auch zum Beispiel aus Gründen des Feuerschutzes in zwei oder mehrere ähnlich aufgebaute Lagerteile unterteilt werden, so dass Exemplare derselben Ware an zwei oder drei Stellen des Gesamtlagers eingelagert werden.

Die Fig. 1 bis 4 zeigen Ausführungsbeispiele der vorliegenden Erfindung im Detail:
Fig. 1 zeigt schematisch einen Teil eines Lagerhaltungssystems mit einem Lagerplatz mit mehreren Waren gleicher Art und Güte,
Fig. 2 zeigt den Wareneingang eines Lagerhaltungssystems, wo angelieferte Waren identifiziert und gebucht werden,
Fig. 3 zeigt den Wareneingang eines Lagerhaltungssystems, wo angelieferte Waren von einer Waage gewogen werden, und
Fig. 4 zeigt schematisch einen Ablauf eines Lagervorgangs.

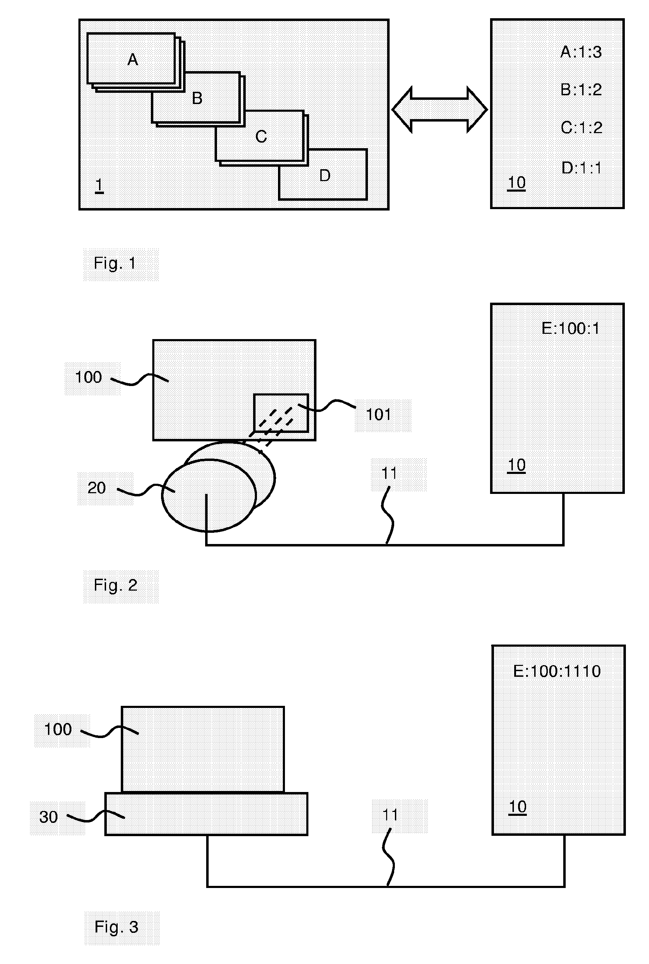

Fig. 1 zeigt schematisch einen Teil eines Lagerhaltungssystems mit einer Lagerhalle und einem Lagerplatz 1 in Form einer Palette oder Kiste mit mehreren Waren gleicher Art und Güte, welche verschiedenen Eigentümern A, B, C, D gehören. Die artgleichen Waren sind schematisch durch gleich grosse Rechtecke dargestellt und in einem Warenstapel angeordnet. Insgesamt befinden sich 8 Einheiten der artgleicher Waren, z.B. Drucker am Lagerplatz 1. Das Lagerhaltungssystem kann natürlich auch mehrere und räumlich in grossen Distanzen zueinander liegende Lagerhallen aufweisen.

Eine Zuordnung, welchem Eigentümer welche Warenmenge gehört, erfolgt ausschliesslich über die elektronische Bestandesführung 10, jedoch nicht physisch am Lagerplatz 1. Diese Zuordnung ist durch den Doppelpfeil dargestellt. Die elektronische Bestandesführung 10 führt Buch über die Eigentumsverhältnisse der Waren. So besagt die Formel A:1:3, dass dem Eigentümer A 3 Einheiten der am Lagerplatz 1 gelagerten Waren, hier Drucker, gehören. Entsprechend besagt die Formel B:1:2, dass dem Eigentümer B 2 Einheiten der am Lagerplatz 1 gelagerten Waren, z.B. Mobiltelefone gehören; die Formel C:1:2 besagt, dass dem Eigentümer C 2 Einheiten der am Lagerplatz 1 gelagerten Waren, z.B. Modems gehören und D:1:1 besagt, dass dem Eigentümer D 1 Einheit der am Lagerplatz 1 gelagerten Waren, z.B. Verbindungskabel gehört. Zur besseren Darstellung dieser Zuordnung der Menge artgleicher Waren zu verschiedenen Eigentümern ist der Warenstapel schematisch nach Eigentümern aufgefächert dargestellt.

Fig. 2 zeigt den Wareneingang eines Lagerhaltungssystems, wo in der Lagerhalle angelieferte Waren 100 gleicher Art und Güte identifiziert und eigentümerspezifisch gebucht werden. Eine beispielweise an den Waren 100 und/oder an der Verpackung der Waren 100 und/oder auf dem Lieferschein der Waren 100 angebrachte Lagerwarennummer 101 wird von einem Lesegerät 20 gelesen. Die gestrichelten Linien zeigen schematisch ein berührungsloses Einlesen der Lagerwarennummer 101 an. Die eingelesene Lagerwarennummer 101 wird über eine elektrische Verbindung 11 an die elektronische Bestandesführung 10 übermittelt und dort abgespeichert. Zusätzlich zur Lagerwarennummer 101 kann die Adresse des Lieferanten/Eigentümers sowie die Menge der angelieferten Ware 100 erfasst werden. Die Formel E:100:1 besagt, dass der Eigentümer E 1 Einheit der Waren 100 angeliefert hat. Alle diese Angaben können einen aktualisierbaren Zeitstempel aufweisen.

Fig. 3 zeigt den Wareneingang eines Lagerhaltungssystems, wo in der Lagerhalle angelieferte Waren 100 gleicher Art und Güte von einer Waage 30 gewogen werden. Das derart erfasste Gewicht der Waren 100 wird von der Waage 30 über eine elektrische Verbindung 11 an die elektronische Bestandesführung 10 übermittelt und dort abgespeichert. Zusätzlich zum Gewicht der Waren 100 kann die Adresse des Lieferanten/Eigentümers der angelieferten Waren 100 erfasst werden. Die Formel E:100:1110 bedeutet hier, dass der Eigentümer E Waren 100 mit einem Gewicht von 1110 Gramm angeliefert hat. Auch diese Angaben können einen aktualisierbaren Zeitstempel aufweisen.

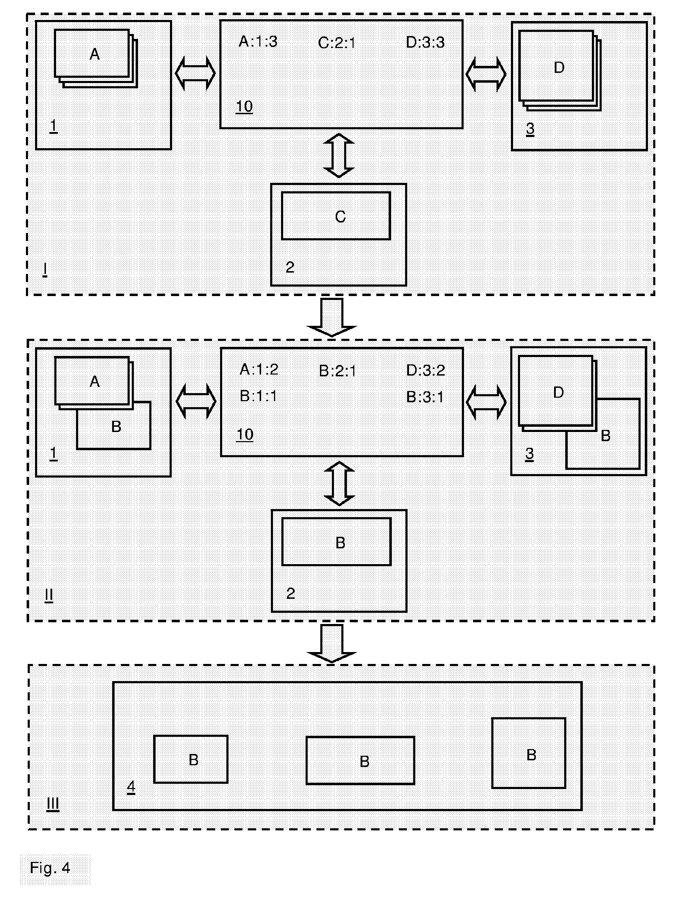

Fig. 4 zeigt schematisch einen Ablauf einer Einlagerung I, eines Warenkauf II und einer Kommissionierung III in einem Teil eines Lagerhaltungssystems mit warengleichen Lagerplätzen 1, 2, 3 in Form von Paletten oder Kisten mit mehreren Waren gleicher Art und Güte, welche verschiedenen Eigentümern A, B, C, D gehören. Die Waren gleicher Art und Güte sind schematisch durch gleich grosse Rechtecke dargestellt und in Warenstapeln angeordnet. Am Lagerplatz 1 lagern 3 Einheiten der Waren gleicher Art und Güte, am Lagerplatz 2 lagert 1 Einheit der Waren gleicher Art und Güte, am Lagerplatz 3 lagern 3 Einheiten der Waren gleicher Art und Güte.

Eine Zuordnung, welchem Eigentümer welche Warenmenge gehört, erfolgt ausschliesslich über die elektronische Bestandesführung 10, jedoch nicht physisch an den Lagerplätzen 1, 2, 3. Diese Zuordnung ist durch Doppelpfeile dargestellt. Die elektronische Bestandesführung 10 führt zu jedem Zeitpunkt Buch über die Eigentumsverhältnisse der Waren.

Bei der Einlagerung I beispielsweise gehören alle Waren gleicher Art und Güte der Lagerplätze 1, 2, 3 den Lieferanten A, C und D. Gemäss der Formel A:1:3 gehören dem Eigentümer A 3 Einheiten von der am Lagerplatz 1 gelagerten Waren, entsprechend gehört gemäss der Formel C:2:1 dem Eigentümer C 1 Einheit der am Lagerplatz 2 gelagerten Waren und gemäss der Formel D:3:3 gehören dem Eigentümer D 3 Einheiten der am Lagerplatz 3 gelagerten Waren.

Nun findet durch den Eigentümer B ein Warenkauf II statt. In Fig. 4 folgt der Warenkauf II auf die Einlagerung I, was durch einen Einfachpfeil gekennzeichnet ist. Dieser Eigentumsübertrag an den Eigentümer B wird in der elektronischen Bestandesführung 10 wie folgt gebucht: gemäss der Formel B:1:1 kauft der Eigentümer B 1 Einheit der am Lagerplatz 1 gelagerten Waren; gemäss der Formel B:2:1 kauft der Eigentümer B 1 Einheit der am Lagerplatz 2 gelagerten Waren; gemäss der Formel B:3:1 kauft der Eigentümer B 1 Einheit der am Lagerplatz 3 gelagerten Waren. Da der Eigentümer B diese Waren jeweils von den Eigentümern A, C und D erwirbt, erniedrigt sich deren Eigentum entsprechend um jeweils 1 Einheit der Waren.

Sobald der Eigentümer B die Waren aus dem Lagerhaltungssystem abruft, findet die Kommissionierung III der Waren des Eigentümers B statt. In Fig. 4 folgt die Kommissionierung III dem dem Warenkauf II, was durch einen Einfachpfeil gekennzeichnet ist. Gemäss der aktuellen Daten der elektronischen Bestandesführung 10 wird ein Rüstschein ausgestellt und die verschiedenen Waren gleicher Art und Güte von entsprechenden Lagerplätzen 1, 2, 3 aus kommissioniert, verpackt und verladen. Mit 4 ist hier eine Palette oder Kiste bezeichnet, welche gemäss der Formeln B:1:1, B:2:1 und B:3:1 je 1 Einheit der Waren der Lagerplätze 1, 2, 3 des Eigentümers B enthält.

Vorteilhafterweise erfolgt bereits im Lagerhaltungssystem eine Warenauszeichnung. Die Warenauszeichnung umfasst in der Regel eine zusätzliche Kennzeichnung der Waren nach den Wünschen der Eigentümer. So werden die Waren bereits beim Wareneingang oder auch erst bei der Kommissionierung mit Klebe-Etiketten und/oder Verpackungen versehen, welche Klebe-Etiketten und/oder Verpackungen vom Eigentümern gewünschte Warenangaben wie eine Warenbezeichnung, ein Warenpreis, usw. angeben.

## Patentansprüche

1. Lagerhaltungssystem, **dadurch gekennzeichnet, dass** in eine Lagerhalle angelieferte artgleiche Waren mehrerer Lieferanten und/oder Kunden an einem gemeinsamen Lagerplatz eingelagert und/oder gelagert sind.

2. Lagerhaltungssystem gemäss Anspruch 1, **dadurch gekennzeichnet, dass** alle artgleichen Waren bis zu ihrem Verlassen des Lagers physisch an demselben Lagerplatz verbleiben.

3. Lagerhaltungssystem gemäss Anspruch 1, **dadurch gekennzeichnet, dass** artgleiche Waren nicht mehr redundant an verschiedenen Lagerplätzen in verschiedenen Lieferanten und/oder Kunden reservierten Bereichen der Lagerhalle eingelagert und/oder gelagert sind.

4. Betriebsverfahren eines Lagerhaltungssystems, **dadurch gekennzeichnet, dass** in eine Lagerhalle angelieferte artgleiche Waren mehrerer Lieferanten und/oder Kunden an einem gemeinsamen Lagerplatz eingelagert und/oder gelagert werden.

5. Betriebsverfahren gemäss Anspruch 4, **dadurch gekennzeichnet, dass** alle artgleichen Waren bis zu ihrem Verlassen des Lagers an demselben Lagerplatz verbleiben und physisch nicht bewegt werden.

6. Betriebsverfahren gemäss Anspruch 4, **dadurch gekennzeichnet, dass** die einzelnen Waren auch als Folge kaufmännischer Vorgänge nicht bewegt werden und physisch an derselben Stelle verbleiben.

7. Betriebsverfahren gemäss einem der Ansprüche 4 bis 6, **dadurch gekennzeichnet, dass** nach einem Eigentumsübertrag vom Lieferanten auf den Kunden keine physische Warenumlagerung durchgeführt wird und/oder die Waren während der gesamten Aufenthaltsdauer im Lagerhaltungssystem an ein und demselben warengleichen Lagerplatz eingelagert werden.

8. Betriebsverfahren gemäss einem der Ansprüche 4 bis 7, **dadurch gekennzeichnet, dass** für angelieferte artgleiche Waren eine Lagerwarennummer beispielsweise mittels eines magnetischen Strichkodes und/oder einer Radiofrequenz Etikette erfasst wird, wobei jeder Lagerwarennummer warengleiche Lagerplätze im Lagerhaltungssystem zugeordnet sind.

9. Betriebsverfahren gemäss einem der Ansprüche 4 bis 8, **dadurch gekennzeichnet, dass** eine Warennummer des Herstellers als Lagerwarennummer des Lagerhaltungssystems verwendet wird.

10. Betriebsverfahren gemäss einem der Ansprüche 4 bis 9, **dadurch gekennzeichnet, dass** für artgleiche Waren ein Vermengungsparameter geführt wird und dass bei Warenanlieferung oder bei einem Eigentumsübertrag überprüft wird, ob der Eigentümer einer Warenvermengung zustimmt.

11. Betriebsverfahren gemäss Anspruch 10, **dadurch gekennzeichnet, dass** bei einer Zustimmung des Eigentümers der Vermengungsparameter auf "Eins" gesetzt und artgleiche Waren des Eigentümers an warengleichen Lagerplätzen gelagert werden und dass bei einer Ablehnung des Eigentümers der Vermengungsparameter auf "Null" gesetzt und artgleiche Waren des Eigentümers an für den Eigentümer reservierten Lagerplätzen gelagert werden.
